# EUROPEAN PATENT APPLICATION

(11) **EP 4 779 851 A1**
(43) Date of publication of application: **22.07.2026**
(21) Application number: 23951941.6
(22) Date of filing: 20.09.2023
(51) Int. Cl.: H02K 33/18

(54) **MAGNETIC LEVITATION VIBRATION MOTOR**

(30) Priority: 13.09.2023 CN 202311184849
(71) Applicant: Shenzhen Guli Technology Co., Ltd., Shenzhen, Guangdong 518000 (CN)
(72) Inventor: YU, Hongyong, Shenzhen, Guangdong 518000 (CN); HUANG, Jingzhuo, Shenzhen, Guangdong 518000 (CN)
(74) Representative: Metida
(86) International application number: PCT/CN2023/120093
(87) International publication number: WO 2025/055014

(57) **Abstract**

The present invention relates to a magnetic levitation vibration motor, comprising a housing assembly, a vibrator assembly, an electromagnetic coil, and a positioning structure. The housing assembly comprises a sleeve member and a first cylindrical body. The sleeve member is sleeved on the outer side of the first cylindrical body, and an accommodating cavity is formed within the first cylindrical body. The vibrator assembly comprises a counterweight member, a magnet, a second cylindrical body, and a position-limiting member. An accommodating cavity is formed within the second cylindrical body, the counterweight member is located on a side of the magnet, and the position-limiting member restricts the counterweight member and the magnet within the accommodating cavity. The electromagnetic coil is located between the sleeve member and the first cylindrical body. The positioning structure is located on an inner wall of the first cylindrical body and/or on an outer wall of the second cylindrical body. The magnet generates a first magnetic field. In a natural state, the magnet and the sleeve member produce magnetic attraction under the action of the first magnetic field, so that the second cylindrical body levitates in the accommodating cavity. When the electromagnetic coil generates a changing second magnetic field, the direction of the vibrator assembly toward an end cap is designated as a first direction, and the vibrator assembly performs reciprocating vibration in the first direction within the accommodating cavity under the interaction of the first magnetic field and the second magnetic field.

## Description

### TECHNICAL FIELD

The present invention relates to the technical field of motors, and in particular, to a magnetic levitation vibration motor.

### BACKGROUND

In the prior art, in a linear vibration motor, a vibrator moves linearly. Since the vibrator levitates and vibrates in a cavity of a housing, reciprocating motion of the vibrator is prone to friction and collision with side walls, causing linear reciprocating motion of the vibrator in the vibration motor to easily deviate. Moreover, it is difficult to precisely control an offset of the vibrator in high-frequency electromagnetic vibration, leading to abnormal noise and wear when the vibrator collides with the housing, which seriously affects the service life of a magnetic levitation vibration motor and user experience. Therefore, how to reduce the offset of the vibrator without affecting a vibrator frequency of the magnetic levitation vibration motor is an urgent technical problem to be solved.

### SUMMARY

An objective of the present invention is to provide a magnetic levitation vibration motor, intended to reduce an offset of a vibrator without affecting a vibrator frequency of the magnetic levitation vibration motor.

To solve the above technical problem, a magnetic levitation vibration motor is provided, including a housing assembly, a vibrator assembly, an electromagnetic coil, and a positioning structure. The housing assembly includes a sleeve member, a first cylindrical body, and an end cover. The end cover is clamped to one end of the first cylindrical body, the sleeve member sleeves an outer side of the first cylindrical body, and an accommodating cavity is formed in the first cylindrical body. The vibrator assembly includes a counterweight, a magnet, a second cylindrical body, and a limiting member. A receiving cavity and a clamping groove communicated with the receiving cavity are formed in the second cylindrical body, the counterweight is located on one side of the magnet, the limiting member limits the counterweight and the magnet in the receiving cavity, and one end of the limiting member is clamped to the clamping groove. The electromagnetic coil is located between the sleeve member and the first cylindrical body. The positioning structure is disposed on an inner wall of the first cylindrical body and/or on an outer wall of the second cylindrical body, so as to allow the second cylindrical body to slide at intervals in the accommodating cavity.

The sleeve member is made of a magnetic material, the first cylindrical body and the second cylindrical body are both made of a non-magnetic material, the magnet generates a first magnetic field, in a natural state, the magnet and the sleeve member produce a magnetic attraction force under the action of the first magnetic field, so that the second cylindrical body levitates in the accommodating cavity, and when the electromagnetic coil generates a varying second magnetic field, a direction of the vibrator assembly towards the end cover is designated as a first direction, and the vibrator assembly performs reciprocating vibration in the accommodating cavity along the first direction under interaction between the first magnetic field and the second magnetic field.

Further, the positioning structure includes first guide posts, a length direction of the first guide posts is consistent with the first direction, at least two of the first guide posts being connected at intervals on the inner wall of the first cylindrical body, and side surfaces of the first guide posts abut against the outer wall of the second cylindrical body, so that the second cylindrical body performs reciprocating vibration in the accommodating cavity along the first guide posts.

Further, the first guide posts include first cylindrical surfaces, the first cylindrical surfaces abutting against the outer wall of the second cylindrical body, so that the first guide posts are in tangential contact with the outer wall of the second cylindrical body.

Further, the end cover includes a snap-fit groove, the snap-fit groove being communicated with the accommodating cavity, and one end of the first cylindrical body is provided with a protruding snapping portion, the snapping portion being clamped into the snap-fit groove; and a ventilation hole communicated with the accommodating cavity is formed at an end of the first cylindrical body away from the end cover.

Further, the magnet is provided with counterweights on two sides, the counterweights being located in the receiving cavity.

Further, the positioning structure further includes second guide posts, a length direction of the second guide posts is consistent with the first direction, at least two of the second guide posts being connected at intervals on the outer wall of the second cylindrical body, and side surfaces of the second guide posts abut against the inner wall of the first cylindrical body, so that the second cylindrical body performs reciprocating vibration in the accommodating cavity along the second guide posts.

Further, the second guide posts include arc surfaces and second cylindrical surfaces, the arc surfaces smoothly transitioning and connecting to two sides of the second cylindrical surfaces, and the second cylindrical surfaces abutting against the inner wall of the first cylindrical body, so that the second guide posts are in tangential contact with the inner wall of the first cylindrical body.

Further, the positioning structure further includes third guide posts, a length direction of the third guide posts is consistent with the first direction, at least two groups of the third guide posts being connected at intervals on the outer wall of the second cylindrical body, and side surfaces of the third guide posts abut against the inner wall of the first cylindrical body, so that the second cylindrical body performs reciprocating vibration in the accommodating cavity along the third guide posts.

Further, each group of the third guide posts includes two third guide posts arranged adjacently, first slide grooves are formed in the third guide posts arranged adjacently, and the first guide posts abut against the first slide grooves, so that the second cylindrical body performs reciprocating vibration in the accommodating cavity along the first slide grooves.

Further, the positioning structure includes fourth guide posts, a length direction of the fourth guide posts is consistent with the first direction, at least two groups of the fourth guide posts being connected at intervals on the inner wall of the first cylindrical body, and side surfaces of the fourth guide posts abut against the outer wall of the second cylindrical body, so that the second cylindrical body performs reciprocating vibration in the accommodating cavity along the fourth guide posts; and
each group of the fourth guide posts includes two fourth guide posts arranged adjacently, second slide grooves are formed in the fourth guide posts arranged adjacently, and the second guide posts abut against the second slide grooves, so that the second cylindrical body performs reciprocating vibration in the accommodating cavity along the second slide grooves.

Implementation of the embodiments of the present invention will achieve the following beneficial effects.

According to the magnetic levitation vibration motor in this embodiment, due to the magnetic attraction force generated between the magnet and the sleeve member under the action of the first magnetic field, the second cylindrical body levitates in the accommodating cavity. The positioning structure allows the second cylindrical body to slide at intervals in the accommodating cavity, so that when the electromagnetic coil generates a varying second magnetic field, the vibrator assembly performs reciprocating vibration in the accommodating cavity along the first direction, which overcomes the problem in the prior art that it is difficult to control the offset of the vibrator during high-frequency vibration.

### BRIEF DESCRIPTION OF THE DRAWINGS

In order to more clearly illustrate the technical solutions in embodiments of the present invention or the prior art, the accompanying drawings used in the description of the embodiments or the prior art will be briefly introduced below. It is apparent that, the accompanying drawings in the following description are only some embodiments of the present invention, and other drawings can be obtained by those of ordinary skill in the art from the provided drawings without creative efforts.
FIG. 1 is a schematic structural diagram of a magnetic levitation vibration motor according to Embodiment 1 of the present invention;
FIG. 2 is a schematic exploded view of the magnetic levitation vibration motor according to Embodiment 1 of the present invention;
FIG. 3 is a schematic structural diagram of a first cylindrical body according to Embodiment 1 of the present invention;
FIG. 4 is a partial enlarged view of Part A in FIG. 3;
FIG. 5 is a schematic exploded view of a vibrator assembly according to Embodiment 1 of the present invention;
FIG. 6 is a schematic structural diagram of a second cylindrical body according to Embodiment 1 of the present invention;
FIG. 7 is a schematic structural diagram of an end cover according to Embodiment 1 of the present invention;
FIG. 8 is a schematic exploded view of the magnetic levitation vibration motor according to Embodiment 2 of the present invention;
FIG. 9 is a schematic structural diagram of the second cylindrical body according to Embodiment 2 of the present invention;
FIG. 10 is a partial enlarged view of Part B in FIG. 9;
FIG. 11 is a schematic exploded view of the magnetic levitation vibration motor according to Embodiment 3 of the present invention;
FIG. 12 is a schematic structural diagram of the vibrator assembly according to Embodiment 3 of the present invention; and
FIG. 13 is a partial enlarged view of Part C in FIG. 12.
   100: magnetic levitation vibration motor; 110: housing assembly; 111: sleeve member; 112: first cylindrical body; 1121: accommodating cavity; 1122: snapping portion; 1123: ventilation hole; 113: end cover; 1131: snap-fit groove; 120: vibrator assembly; 121: counterweight; 122: magnet; 123: second cylindrical body; 1231: receiving cavity; 1232: clamping groove; 124: limiting member; 130: electromagnetic coil; 140: positioning structure; 141: first guide post; 1411: first cylindrical surface; 142: second guide post; 1421: arc surface; 1422: second cylindrical surface; 143: third guide post; 1431: first slide groove.

### DETAILED DESCRIPTION

To facilitate understanding of the present invention, a more comprehensive description of the present invention will be given below with reference to the relevant accompanying drawings. Preferred embodiments of the present invention are given in the drawings. However, the present invention may be implemented in many different forms and is not limited to the embodiments described herein. Rather, these embodiments are provided to make the contents disclosed in the present invention more fully understood.

It should be noted that when one element is referred to as being "fixed to" another element, it may be directly disposed on the another element or an intermediate element may exist. When one element is considered to be "connected to" another element, it may be directly connected to the another element or an intermediate element may co-exist. The terms "vertical", "horizontal", "left", "right" and similar expressions used herein are for illustrative purposes only.

Unless defined otherwise, all technical and scientific terms used herein have the same meanings as would generally understood by those skilled in the technical field of the present invention. The terms used herein in the specification of the present invention are for the purpose of describing specific embodiments only, and are not intended to limit the present invention. The term "and/or" used herein includes any and all combinations of one or more related listed items.

### Embodiment 1

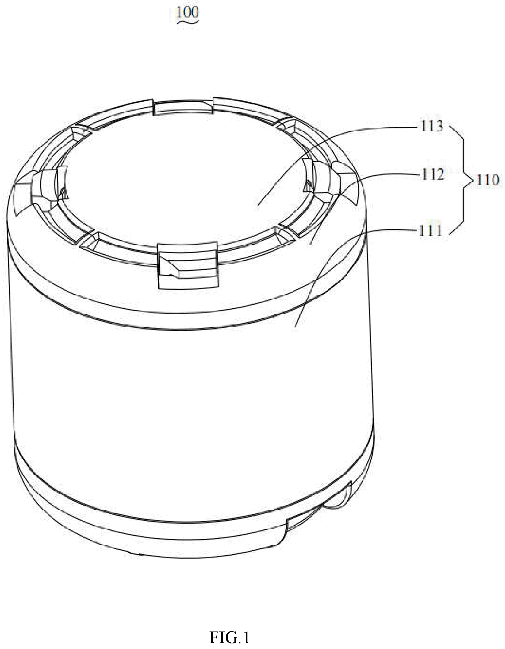

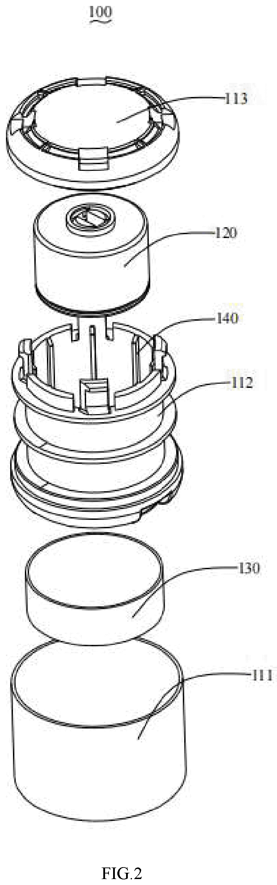

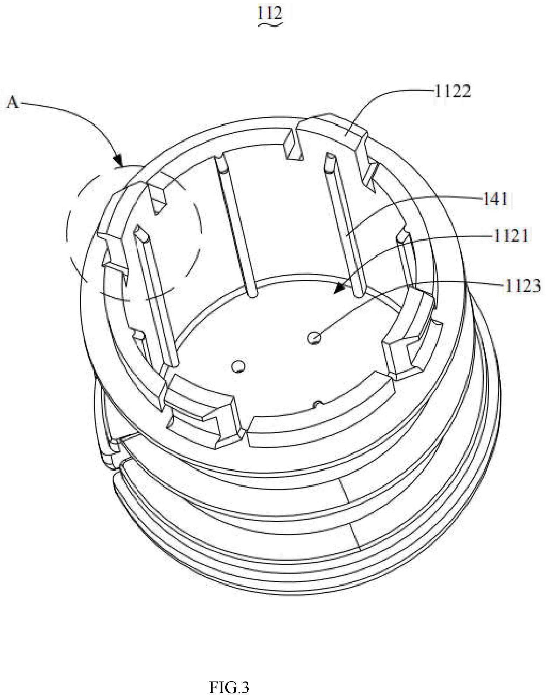

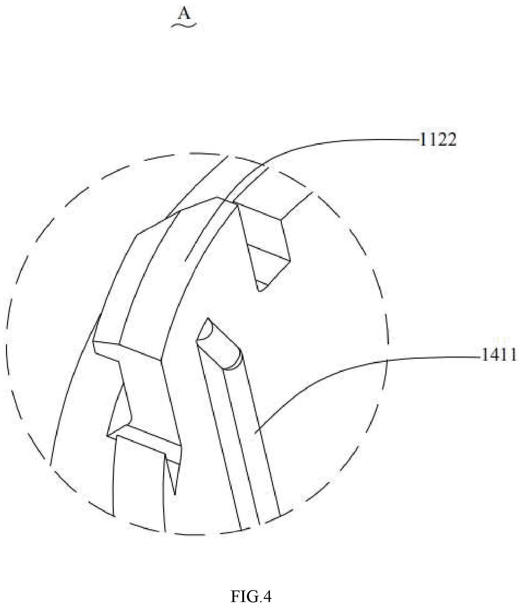

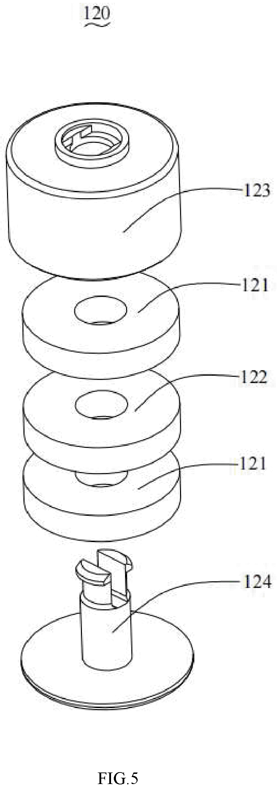

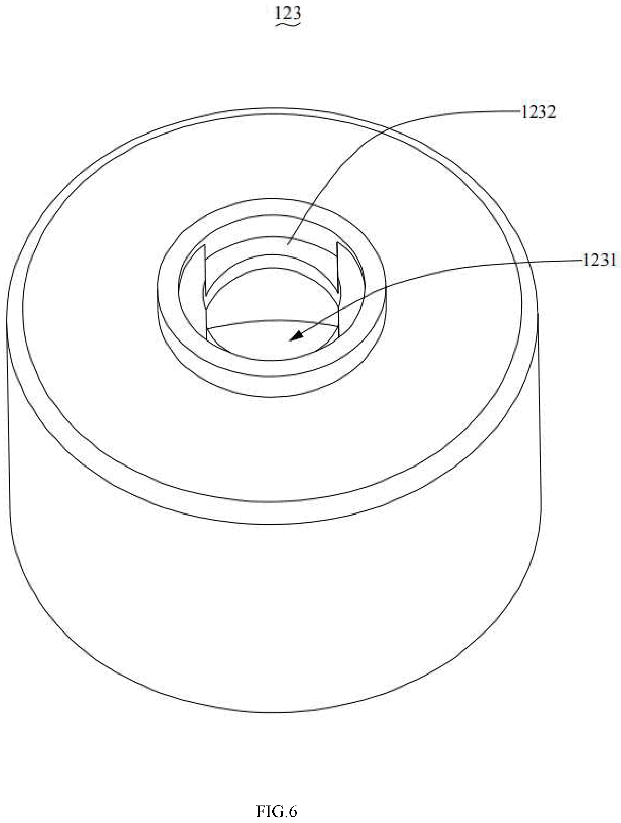

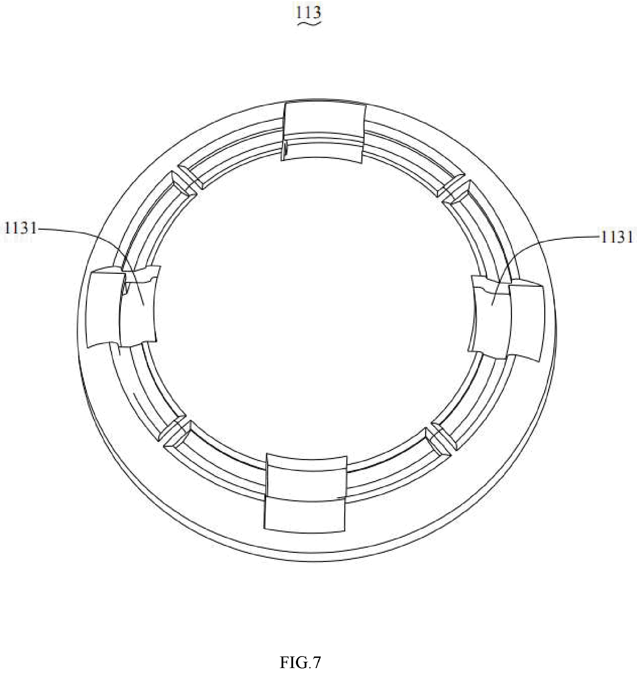

Referring to FIG. 1 to FIG. 7, Embodiment 1 of the present invention provides a magnetic levitation vibration motor 100, including a housing assembly 110, a vibrator assembly 120, an electromagnetic coil 130, and a positioning structure 140. The housing assembly 110 includes a sleeve member 111, a first cylindrical body 112, and an end cover 113. The end cover 113 is clamped to one end of the first cylindrical body 112, the sleeve member 111 sleeves an outer side of the first cylindrical body 112, and an accommodating cavity 1121 is formed in the first cylindrical body 112. The vibrator assembly 120 includes a counterweight 121, a magnet 122, a second cylindrical body 123, and a limiting member 124. A receiving cavity 1231 and a clamping groove 1232 communicated with the receiving cavity 1231 are formed in the second cylindrical body 123, the counterweight 121 is located on one side of the magnet 122, the limiting member 124 limits the counterweight 121 and the magnet 122 in the receiving cavity 1231, and one end of the limiting member 124 is clamped to the clamping groove 1232. The electromagnetic coil 130 is located between the sleeve member 111 and the first cylindrical body 112. The positioning structure 140 is disposed on an inner wall of the first cylindrical body 112 and/or on an outer wall of the second cylindrical body 123, so as to allow the second cylindrical body 123 to slide at intervals in the accommodating cavity 1121.

The sleeve member 111 is made of a magnetic material, the first cylindrical body 112 and the second cylindrical body 123 are both made of a non-magnetic material, and the magnet 122 generates a first magnetic field. In a natural state, the magnet 122 and the sleeve member 111 produce a magnetic attraction force under the action of the first magnetic field, so that the second cylindrical body 123 levitates in the accommodating cavity 1121. When the electromagnetic coil 130 generates a varying second magnetic field, a direction of the vibrator assembly 120 towards the end cover 113 is designated as a first direction, and the vibrator assembly 120 performs reciprocating vibration in the accommodating cavity 1121 along the first direction under interaction between the first magnetic field and the second magnetic field. In a specific application, due to the magnetic attraction force generated between the magnet 122 and the sleeve member 111 under the action of the first magnetic field, the second cylindrical body 123 levitates in the accommodating cavity 1121. Theoretically, the vibrator assembly 120 may centrally levitate in the accommodating cavity 1121, and under the action of the varying second magnetic field, the vibrator assembly 120 performs linear reciprocating vibration in the accommodating cavity 1121 along the first direction. However, in practical applications, when the vibrator assembly 120 performs linear reciprocating vibration along the first direction, lateral deviation may occur. A reason for this phenomenon includes uneven centered magnetic attraction caused by an uneven thickness of the sleeve member 111, or uneven centered distribution of the second magnetic field generated by the electromagnetic coil 130. Consequently, it is difficult to ensure that the vibrator assembly 120 can maintain required linear reciprocating vibration when moving along the first direction. Therefore, in the present invention, the positioning structure 140 is disposed on the inner wall of the first cylindrical body 112 or on the outer wall of the second cylindrical body 123, or the positioning structure 140 is disposed on both the inner wall of the first cylindrical body 112 and the outer wall of the second cylindrical body 123. In this way, the second cylindrical body 123 abuts against the positioning structure 140 and slides in the accommodating cavity 1121, which can ensure that centered linear reciprocating vibration of the vibrator assembly 120 is inside the accommodating cavity 1121. Consequently, an offset generated by the vibrator in the magnetic levitation vibration motor 100 can be reduced, preventing an influence on the service life due to collision and wear between the vibrator assembly 120 and an inner wall of the accommodating cavity 1121.

In a possible implementation, the positioning structure 140 includes first guide posts 141, a length direction of the first guide posts 141 is consistent with the first direction, at least two of the first guide posts 141 are connected at intervals on the inner wall of the first cylindrical body 112, and side surfaces of the first guide posts 141 abut against the outer wall of the second cylindrical body 123, so that the second cylindrical body 123 performs reciprocating vibration in the accommodating cavity 1121 along the first guide posts 141. In a specific application, in order to prevent an influence of the arrangement of the positioning structure 140 on a vibration frequency of the vibrator assembly 120, the positioning structure 140 includes first guide posts 141 in a same direction as the first direction. The first guide posts 141 are integrally formed with the first cylindrical body 112, and at least two of the first guide posts 141 are spaced around and connected to the inner wall of the first cylindrical body 112. Side surfaces of the first guide posts 141 abut against the outer wall of the second cylindrical body 123, so that the second cylindrical body 123 performs reciprocating vibration in the accommodating cavity 1121 along the first guide posts 141. In this way, through the positioning structure 140, centered linear vibration of the vibrator assembly 120 is enhanced, and the positioning structure 140 can avoid generating resistance to the reciprocating vibration of the vibrator assembly 120.

In a possible implementation, the first guide posts 141 include first cylindrical surfaces 1411, and the first cylindrical surfaces 1411 abut against the outer wall of the second cylindrical body 123, so that the first guide posts 141 are in tangential contact with the outer wall of the second cylindrical body 123. In a specific application, to reduce a contact area between the first guide posts 141 and the second cylindrical body 123, the first cylindrical surfaces 1411 of the first guide posts 141 abut against the outer wall of the second cylindrical body 123, so that the first guide posts 141 is in tangential contact with the outer wall of the second cylindrical body 123. In this way, friction between the first guide posts 141 and the second cylindrical body 123 can be reduced, thereby enabling the vibrator assembly 120 to smoothly perform linear reciprocating vibration in the accommodating cavity 1121.

In a possible implementation, the end cover 113 includes a snap-fit groove 1131, the snap-fit groove 1131 is communicated with the accommodating cavity 1121, one end of the first cylindrical body 112 is provided with a protruding snapping portion 1122, and the snapping portion 1122 is clamped into the snap-fit groove 1131. A ventilation hole 1123 communicated with the accommodating cavity 1121 is formed at an end of the first cylindrical body 112 away from the end cover 113. In a specific application, the snap-fit groove 1131 is communicated with the accommodating cavity 1121, and the ventilation hole 1123 communicated with the accommodating cavity 1121 is formed in the first cylindrical body 112. In this way, when the vibrator assembly 120 performs reciprocating vibration in the accommodating cavity 1121, the end cover 113 and two ends of the first cylindrical body 112 compress the air inside the accommodating cavity 1121, thereby generating larger air resistance. By communicating the snap-fit groove 1131 with the accommodating cavity 1121 and communicating the ventilation hole 1123 with the accommodating cavity 1121, the compressed air in the accommodating cavity 1121 can be promptly discharged to outside air, thereby eliminating an influence of the air resistance on vibration intensity and frequency of the vibrator assembly 120.

In a possible implementation, the magnet 122 is provided with counterweights 121 on two sides, and the counterweights 121 are located in the receiving cavity 1231. In a specific application, the counterweights 121 are connected to the magnet 122 to enhance an inertia force of the vibrator assembly 120, thereby increasing the vibration intensity of the vibrator assembly 120 in the accommodating cavity 1121. If the counterweights 121 are provided only on one side of the magnet 122, taking the middle of the accommodating cavity 1121 as a dividing line, intensity and frequency of the reciprocating vibration of the vibrator assembly 120 may be different, or the vibrator assembly 120 is unbalanced in the reciprocating vibration, thereby causing damage to the electromagnetic coil 130 due to abnormal power consumption and heating of the electromagnetic coil 130. Therefore, there is a need to dispose the counterweights 121 on the two sides of the magnet 122 to enhance the vibration intensity of the vibrator assembly 120 in the accommodating cavity 1121.

### Embodiment 2

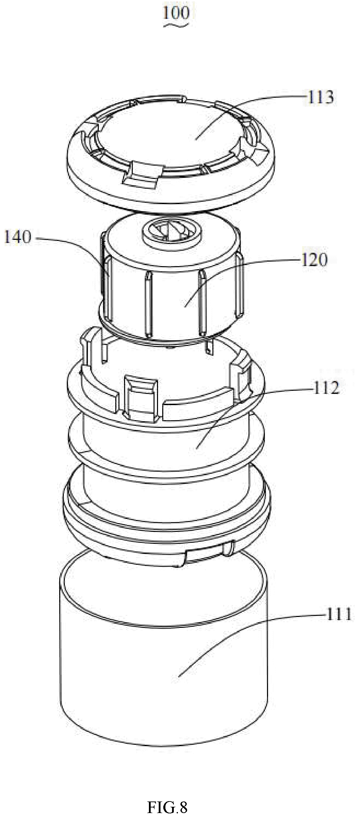

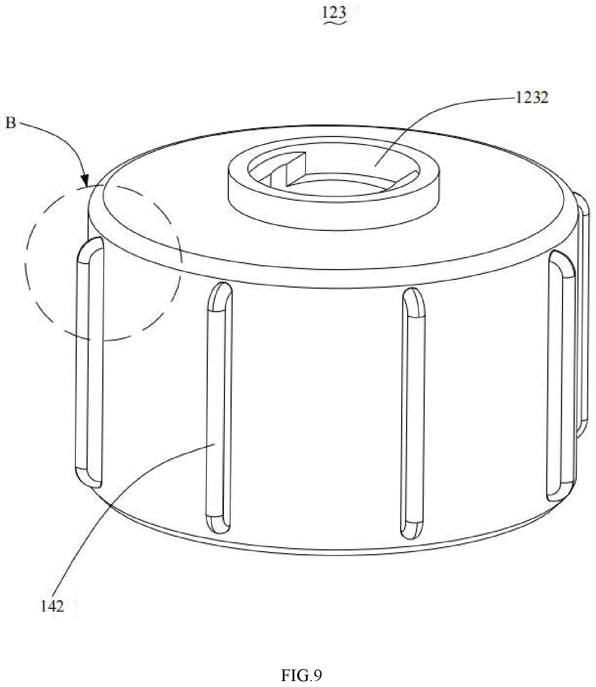

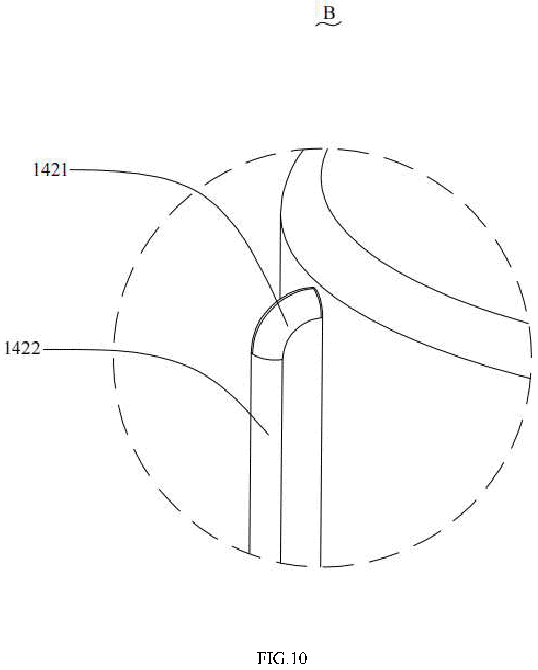

This embodiment differs from Embodiment 1 in the positioning structure 140 specifically as follows:
Referring to FIG. 8 to FIG. 10, the positioning structure 140 in Embodiment 2 of the present invention further includes second guide posts 142, a length direction of the second guide posts 142 is consistent with the first direction, at least two of the second guide posts 142 are connected at intervals on the outer wall of the second cylindrical body 123, and side surfaces of the second guide posts 142 abut against the inner wall of the first cylindrical body 112, so that the second cylindrical body 123 performs reciprocating vibration in the accommodating cavity 1121 along the second guide posts 142. In a specific application, the positioning structure 140 may further be second guide posts 142, and the second guide posts 142 are also in a same direction as the first direction. Different from the solution in Embodiment 1, at least two of the second guide posts 142 are spaced around and connected to the outer wall of the second cylindrical body 123, the second guide posts 142 are integrally formed with the second cylindrical body 123, and side surfaces of the second guide posts 142 abut against the inner wall of the first cylindrical body 112, so that the second cylindrical body 123 performs reciprocating vibration in the accommodating cavity 1121 along the second guide posts 142. In this way, through the second guide posts 142, centered linear vibration of the vibrator assembly 120 can also be enhanced, and the positioning structure 140 can avoid generating resistance to the reciprocating vibration of the vibrator assembly 120.

Further, the second guide posts 142 include arc surfaces 1421 and second cylindrical surfaces 1422, the arc surfaces 1421 smoothly transition and connect to two sides of the second cylindrical surfaces 1422, and the second cylindrical surfaces 1422 abut against the inner wall of the first cylindrical body 112, so that the second guide posts 142 are in tangential contact with the inner wall of the first cylindrical body 112. In a specific application, to prevent motion interference with the end cover 113 or the bottom wall of the first cylindrical body 112 generated by two ends of the second guide posts 142, the arc surfaces 1421 are provided at the two ends of the second guide posts 142, and the arc surfaces 1421 smoothly transition and connect to the second cylindrical surfaces 1422. As a result, the second guide posts 142 are in tangential contact with the inner wall of the first cylindrical body 112. In this way, friction between the second guide posts 142 and the first cylindrical body 112 can also be reduced, enabling the vibrator assembly 120 to smoothly perform linear reciprocating vibration in the accommodating cavity 1121.

### Embodiment 3

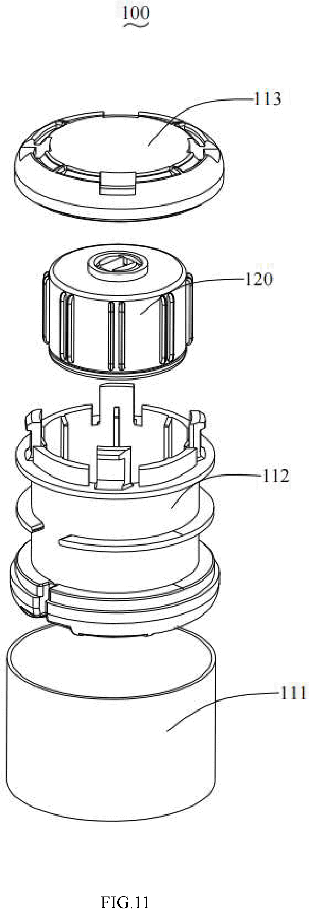

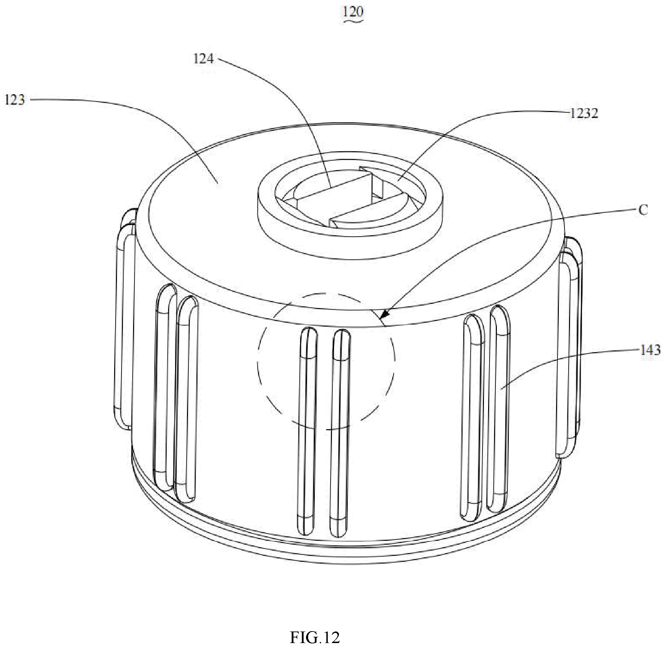

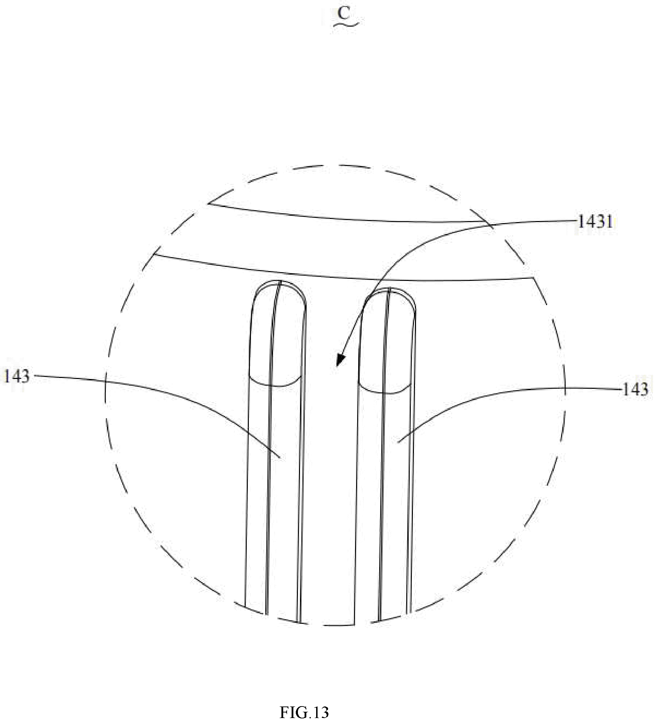

This embodiment differs from Embodiment 1 in the positioning structure 140 specifically as follows:
Referring to FIG. 11 to FIG. 13, the positioning structure 140 in Embodiment 3 of the present invention further includes third guide posts 143, a length direction of the third guide posts 143 is consistent with the first direction, at least two groups of the third guide posts 143 are connected at intervals on the outer wall of the second cylindrical body 123, and side surfaces of the third guide posts 143 abut against the inner wall of the first cylindrical body 112, so that the second cylindrical body 123 performs reciprocating vibration in the accommodating cavity 1121 along the third guide posts 143. In a specific application, the positioning structure 140 may further be third guide posts 143, and the third guide posts 143 are also in a same direction as the first direction. Different from the solution in Embodiment 1, at least two groups of third guide posts 143 are spaced around and connected to the outer wall of the second cylindrical body 123, the third guide posts 143 are integrally formed with the second cylindrical body 123, and side surfaces of the third guide posts 143 abut against the inner wall of the first cylindrical body 112, so that the second cylindrical body 123 performs reciprocating vibration in the accommodating cavity 1121 along the third guide posts 143. In this way, through the third guide posts 143, centered linear vibration of the vibrator assembly 120 can also be enhanced, and the positioning structure 140 can avoid generating resistance to the reciprocating vibration of the vibrator assembly 120.

Further, each group of third guide posts 143 includes two third guide posts 143 arranged adjacently, first slide grooves 1431 are formed in the third guide posts 143 arranged adjacently, and the first guide posts 141 abut against the first slide grooves 1431, so that the second cylindrical body 123 performs reciprocating vibration in the accommodating cavity 1121 along the first slide grooves 1431. In a specific application, during the reciprocating vibration of the vibrator assembly 120, in addition to a lateral offset, the vibrator assembly 120 may also undergo a certain degree of rotation. The high-frequency vibration process of the vibrator assembly 120 easily causes rotational friction between the third guide posts 143 and the first cylindrical body 112, thereby resulting in lateral scratches on the third guide posts 143. These scratches, during high-frequency reciprocating vibration, may lead to increased friction. Therefore, third guide posts 143 arranged adjacently are formed in each group of third guide posts 143, the first slide grooves 1431 are formed in the third guide posts 143 arranged adjacently, and the first guide posts 141 are confined to sliding in the first slide groove 1431, thereby enabling the second cylindrical body 123 to perform reciprocating vibration in the accommodating cavity 1121 along the first slide grooves 1431.

### Embodiment 4

This embodiment differs from Embodiment 4 in the positioning structure 140 specifically as follows:
Referring to FIG. 1 to FIG. 7, the positioning structure 140 in Embodiment 4 of the present invention includes fourth guide posts (not shown), a length direction of the fourth guide posts is consistent with the first direction, at least two groups of the fourth guide posts are connected at intervals on the inner wall of the first cylindrical body 112, and side surfaces of the fourth guide posts abut against the outer wall of the second cylindrical body 123, so that the second cylindrical body 123 performs reciprocating vibration in the accommodating cavity 1121 along the fourth guide posts.

Each group of fourth guide posts includes two fourth guide posts arranged adjacently, second slide grooves (not shown) are formed in the fourth guide posts arranged adjacently, and the second guide posts 142 abut against the second slide grooves, so that the second cylindrical body 123 performs reciprocating vibration in the accommodating cavity 1121 along the second slide grooves. In a specific application, the positioning structure 140 may further be fourth guide posts, and the fourth guide posts are also in a same direction as the first direction. Different from the solution in Embodiment 1, at least two groups of fourth guide posts are spaced around and connected to the inner wall of the first cylindrical body 112, the fourth guide posts 142 are integrally formed with the first cylindrical body 112, and side surfaces of the fourth guide posts 142 abut against the outer wall of the second cylindrical body 123, so that the second cylindrical body 123 performs reciprocating vibration in the accommodating cavity 1121 along the fourth guide posts. In this way, through the fourth guide posts, centered linear vibration of the vibrator assembly 120 can also be enhanced, and the positioning structure 140 can avoid generating resistance to the reciprocating vibration of the vibrator assembly 120. Fourth guide posts arranged adjacently are formed in each group of fourth guide posts, the second slide grooves are formed in the fourth guide posts arranged adjacently, and the second guide posts 142 are confined to sliding in the second slide grooves, thereby enabling the second cylindrical body 123 to perform reciprocating vibration in the accommodating cavity 1121 along the second slide grooves.

The above embodiments only describe several implementations of the present invention, which are described specifically and in detail, and therefore cannot be construed as a limitation on the scope of the patent application. It should be pointed out that those of ordinary skill in the art may also make several changes and improvements without departing from the ideas of the present invention, all of which fall within the protection scope of the present invention. Therefore, the patent protection scope of the present invention shall be subject to the appended claims.

## Claims

1. A magnetic levitation vibration motor, comprising:
a housing assembly, the housing assembly comprising a sleeve member, a first cylindrical body, and an end cover, the end cover being clamped to one end of the first cylindrical body, the sleeve member sleeving an outer side of the first cylindrical body, and an accommodating cavity being formed in the first cylindrical body;
a vibrator assembly, the vibrator assembly comprising a counterweight, a magnet, a second cylindrical body, and a limiting member, a receiving cavity and a clamping groove communicated with the receiving cavity being formed in the second cylindrical body, the counterweight being located on one side of the magnet, the limiting member limiting the counterweight and the magnet in the receiving cavity, and one end of the limiting member being clamped to the clamping groove;
an electromagnetic coil, the electromagnetic coil being located between the sleeve member and the first cylindrical body; and
a positioning structure, the positioning structure being disposed on an inner wall of the first cylindrical body and/or on an outer wall of the second cylindrical body, so as to allow the second cylindrical body to slide at intervals in the accommodating cavity;
wherein the sleeve member is made of a magnetic material, the first cylindrical body and the second cylindrical body are both made of a non-magnetic material, the magnet generates a first magnetic field, in a natural state, the magnet and the sleeve member produce a magnetic attraction force under the action of the first magnetic field, so that the second cylindrical body levitates in the accommodating cavity, and when the electromagnetic coil generates a varying second magnetic field, a direction of the vibrator assembly towards the end cover is designated as a first direction, and the vibrator assembly performs reciprocating vibration in the accommodating cavity along the first direction under interaction between the first magnetic field and the second magnetic field.

2. The magnetic levitation vibration motor according to claim 1, wherein the positioning structure comprises first guide posts, a length direction of the first guide posts is consistent with the first direction, at least two of the first guide posts being connected at intervals on the inner wall of the first cylindrical body, and side surfaces of the first guide posts abut against the outer wall of the second cylindrical body, so that the second cylindrical body performs reciprocating vibration in the accommodating cavity along the first guide posts.

3. The magnetic levitation vibration motor according to claim 2, wherein the first guide posts comprise first cylindrical surfaces, the first cylindrical surfaces abutting against the outer wall of the second cylindrical body, so that the first guide posts are in tangential contact with the outer wall of the second cylindrical body.

4. The magnetic levitation vibration motor according to any one of claims 1 to 3, wherein the end cover comprises a snap-fit groove, the snap-fit groove being communicated with the accommodating cavity, and one end of the first cylindrical body is provided with a protruding snapping portion, the snapping portion being clamped into the snap-fit groove; and a ventilation hole communicated with the accommodating cavity is formed at an end of the first cylindrical body away from the end cover.

5. The magnetic levitation vibration motor according to claim 1, wherein the magnet is provided with counterweights on two sides, the counterweights being located in the receiving cavity.

6. The magnetic levitation vibration motor according to claim 1, wherein the positioning structure further comprises second guide posts, a length direction of the second guide posts is consistent with the first direction, at least two of the second guide posts being connected at intervals on the outer wall of the second cylindrical body, and side surfaces of the second guide posts abut against the inner wall of the first cylindrical body, so that the second cylindrical body performs reciprocating vibration in the accommodating cavity along the second guide posts.

7. The magnetic levitation vibration motor according to claim 6, wherein the second guide posts comprise arc surfaces and second cylindrical surfaces, the arc surfaces smoothly transitioning and connecting to two sides of the second cylindrical surfaces, and the second cylindrical surfaces abutting against the inner wall of the first cylindrical body, so that the second guide posts are in tangential contact with the inner wall of the first cylindrical body.

8. The magnetic levitation vibration motor according to claim 2 or 3, wherein the positioning structure further comprises third guide posts, a length direction of the third guide posts is consistent with the first direction, at least two groups of the third guide posts being connected at intervals on the outer wall of the second cylindrical body, and side surfaces of the third guide posts abut against the inner wall of the first cylindrical body, so that the second cylindrical body performs reciprocating vibration in the accommodating cavity along the third guide posts.

9. The magnetic levitation vibration motor according to claim 8, wherein each group of the third guide posts comprises two third guide posts arranged adjacently, first slide grooves are formed in the third guide posts arranged adjacently, and the first guide posts abut against the first slide grooves, so that the second cylindrical body performs reciprocating vibration in the accommodating cavity along the first slide grooves.

10. The magnetic levitation vibration motor according to claim 6 or 7, wherein the positioning structure comprises fourth guide posts, a length direction of the fourth guide posts is consistent with the first direction, at least two groups of the fourth guide posts being connected at intervals on the inner wall of the first cylindrical body, and side surfaces of the fourth guide posts abut against the outer wall of the second cylindrical body, so that the second cylindrical body performs reciprocating vibration in the accommodating cavity along the fourth guide posts; and
each group of the fourth guide posts comprises two fourth guide posts arranged adjacently, second slide grooves are formed in the fourth guide posts arranged adjacently, and the second guide posts abut against the second slide grooves, so that the second cylindrical body performs reciprocating vibration in the accommodating cavity along the second slide grooves.
